# EUROPÄISCHE PATENTSCHRIFT

(11) **EP 1 327 541 B1**
(45) Veröffentlichungstag und Bekanntmachung des Hinweises auf die Patenterteilung: **22.11.2006**
(21) Anmeldenummer: 02027539.2
(22) Anmeldetag: 09.12.2002
(51) Int. Cl.: B60H 1/00

(54) **Klimatisierungsanlage eines Fahrzeugs**
Air conditioning device for a vehicle
Appareil de climatisation d'un véhicule

(30) Priorität: 09.01.2002 DE 10200487
(43) Veröffentlichungstag der Anmeldung: 16.07.2003
(73) Patentinhaber: Behr GmbH & Co. KG, 70469 Stuttgart (DE)
(72) Erfinder: Burk, Roland, Dipl.-Phys., 70469 Stuttgart (DE); Geskes, Peter, Dr., 70469 Stuttgart (DE); Klingler, Dietrich, Dipl.-Ing., 73540 Heubach (DE)
(74) Vertreter: Grauel, Andreas

(56) Entgegenhaltungen:
- DE-A- 1 942 938
- DE-B- 1 001 907
- PATENT ABSTRACTS OF JAPAN vol. 013, no. 588 (M-912), 25. Dezember 1989 (1989-12-25) & JP 01 247210 A (NISSAN SHATAI CO LTD), 3. Oktober 1989 (1989-10-03)
- PATENT ABSTRACTS OF JAPAN vol. 004, no. 094 (M-019), 8. Juli 1980 (1980-07-08) & JP 55 051615 A (MITSUBISHI MOTORS CORP;OTHERS: 01), 15. April 1980 (1980-04-15)

## Beschreibung

Die vorliegende Erfindung betrifft eine Klimatisierungsanlage eines Fahrzeugs, insbesondere eines Personenkraftwagens, zur Zuführung klimatisierter Luft in einen Fahrzeuginnenraum.

Üblicherweise besitzt eine derartige Klimatisierungsanlage eine Austrittsdüsenanordnung, die für den Sitzplatz des Fahrers und für den Sitzplatz des Beifahrers jeweils eine im Armaturenbrett etwa in der Fahrzeugmitte angeordnete fensterferne Mitteldüse und eine im Armaturenbrett an der Fahrzeugseite angeordnete fensternahe Seitendüse aufweist. Die Klimatisierungsanlage besitzt außerdem eine Kühleinrichtung, insbesondere einen Verdampfer, wobei diese Kühleinrichtung mit Frischluft und/oder mit Umluft beaufschlagt ist und zur Erzeugung von Kaltluft dient. Des weiteren ist eine Heizeinrichtung, insbesondere ein Wärmetauscher, vorgesehen, wobei diese Heizeinrichtung mit der von der Kühleinrichtung kommenden Luft beaufschlagt ist und zur Erzeugung von Heißluft dient. Zur Erzeugung der klimatisierten Luft, die in den Fahrzeuginnenraum eingeführt werden soll, besitzt die Klimatisierungsanlage eine Mischeinrichtung, die einen Mischraum aufweist, an den eingangsseitig ein von der Kühleinrichtung kommender und die Heizeinrichtung umgehender Kaltluftkanal und ein von der Heizeinrichtung kommender Heißluftkanal angeschlossen sind. An den Mischraum sind ausgangsseitig mehrere Mischluftkanäle angeschlossen, die jeweils zu einer der Düsen führen.

Bei einer derartigen Klimatisierungsanlage wird über die Mitteldüse und die Seitendüse, die beide beispielsweise dem Fahrersitz zugeordnet sind, jeweils die in gleicher Weise klimatisierte bzw. temperierte Luft in den Fahrzeuginnenraum eingeblasen. Für den Fall, daß Sonnenlicht seitlich auf die Fahrerseite des Fahrzeugs einstrahlt, wünscht der Fahrer auf seiner von der Sonne bestrahlten Seite Kühlung. Dies führt jedoch dazu, daß über die Mitteldüse der im Schatten liegende Bereich des Fahrers ebenfalls gekühlt wird, was jedoch unerwünscht sein kann und zu Diskomfort führt. Hier will die Erfindung Abhilfe schaffen.

Aus der JP-A-01 247 210 ist eine Heizungseinheit einer Fahrzeugklimaanlage bekannt, die eine unabhängige Temperaturregelung der Belüftung der beiden Seitenbereiche und des Mittelbereichs eines Fahrzeuginnenraums ermöglichen soll. Hierzu werden getrennte Warmluftkanäle und Bypasskanäle im Bereich zwischen einem Heizkörper und dem Lufteintritt in die Heizungseinheit ausgebildet, von welchen aus in weiterer Folge die Ausströmer versorgt werden.

Die Druckschrift DE-B- 1001 907 offenbart eine Lüftungs- und Heizungsanordnung für Kraftfahrzeuge mit zwei Kanalanordnungen mit jeweils einem Heizkörper zur Belüftung der linken und rechten Seite eines Fahrzeugs.

Die vorliegende Erfindung beschäftigt sich mit dem Problem für eine Klimatisierungsanlage der eingangs genannten Art eine verbesserte Ausführungsform anzugeben, die insbesondere eine Komfortsteigerung für die Fahrzeuginsassen ermöglicht.

Dieses Problem wird erfindungsgemäß durch eine Klimatisierungsanlage mit den Merkmalen des Anspruchs 1 gelöst. Vorteilhafte Ausführungsformen sind Gegenstand der abhängigen Ansprüche.

Die Erfindung beruht auf dem allgemeinen Gedanken, die Seitendüse und die Mitteldüse sowohl für die Fahrerseite als auch für die Beifahrerseite hinsichtlich der Klimatisierung, insbesondere der Temperierung, der über diese Düsen in den Fahrzeuginnenraum eingeführten Luft voneinander zu trennen.

Durch diese Maßnahme ist es möglich, über die Seitendüse klimatisierte Luft mit einer anderen Temperatur in den Fahrzeuginnenraum einzublasen als über die Mitteldüse. Insbesondere bei einer seitlichen Sonneneinstrahlung kann nun der betroffene Insasse die der Sonnenbestrahlung ausgesetzt Körperseite stärker kühlen als die im Schatten liegende Körperseite. Hierdurch läßt sich in erheblichem Maße der Komfort steigern. Erreicht wird dies erfindungsgemäß durch separate Mischräume für die Mitteldüse und die Seitendüse, die jeweils für sich mit Kaltluft und Heißluft versorgt werden und in denen unabhängig vom jeweils anderen Mischraum die Vermischung von Kaltluft und Heißluft erfolgt.

Mit "Mitteldüse" und "Seitendüse" werden hier Düsen bezeichnet, die im Fahrzeuginnenraum quer zur Fahrzeuglängsrichtung voneinander beabstandet sind, wobei sich eine "Seitendüse" näher am Seitenfenster befindet als eine "Mitteldüse".

Außerdem kann vorgesehen sein, auch die Luftmenge an den Seitendüsen und Mitteldüsen so einstellen zu können, daß ein Diskomfort vermieden wird.

Von besonderem Interesse ist eine Ausführungsform, bei welcher der Mitteldüsenmischraum und der Seitendüsenmischraum außerdem jeweils für sich eingangsseitig an einen die Kühleinrichtung und die Heizeinrichtung umgehenden Frischluft/Umluftkanal angeschlossen sind. Mit Hilfe einer derartigen Ausführungsform kann bei bestimmten Betriebszuständen der Energieverbrauch der Kühleinrichtung und somit der gesamten Klimatisierungsanlage reduziert werden. Beispielsweise wenn bei warmer Umgebung über die Seitendüse stärker gekühlt werden soll als über die Mitteldüse, kann der Seitendüsenmischraum hauptsächlich mit Kaltluft beaufschlagt werden, während der Mitteldüsenmischraum einen größeren Anteil an unklimatisierter Frischluft/Umluft erhält.

Die unterschiedliche Klimatisierung bzw. Temperierung bei der Mitteldüse und der Seitendüse kann beispielsweise durch unterschiedliche Strömungsquerschnitte in den Kaltluftkanälen bzw. in den Heißluftkanälen realisiert werden. Bevorzugt wird jedoch eine Ausführungsform, bei der beim Mitteldüsenmischraum und beim Seitendüsenmischraum jeweils ein Mischungsverhältnis von zugeführter Kaltluft und zugeführter Heißluft und gegebenenfalls zugeführter Frischluft/Umluft unabhängig vom jeweils anderen Mischraum eingestellt werden kann. Hierdurch ist die Klimatisierung bzw. Temperierung der Luftströmungen an der Mitteldüse und an der Seitendüse stets situationsabhängig variierbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- **Fig. 1**: eine stark vereinfachte Schnittansicht durch einen Teil einer Klimatisierungsanlage nach der Erfindung,
- **Fig. 2**: eine Ansicht wie in Fig. 1, jedoch einer anderen Ausführungsform,
- **Fig. 3**: eine schaltplanartige Prinzipdarstellung eines anderen Teils der Klimatisierungsanlage bei einer ersten Ausführungsform,
- **Fig. 4**: eine Darstellung wie in Fig. 3, jedoch bei einer zweiten Ausführungsform, und
- **Fig. 5**: eine perspektivische, stark vereinfachte Darstellung einer Mischereinheit bei einer besonderen Ausführungsform.

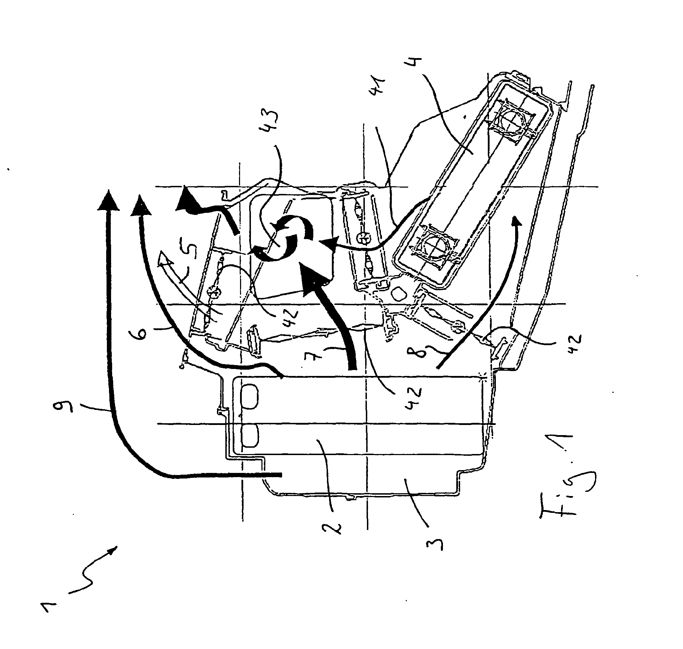

Entsprechend Fig. 1 weist eine erfindungsgemäße Klimatisierungsanlage 1 eines Fahrzeugs, insbesondere eines Personenkraftwagens, eine Kühleinrichtung 2 auf, die beispielsweise durch einen Verdampfer in herkömmlicher Weise gebildet ist. Über einen Luftzuführungskanal 3 wird der Kühleinrichtung 2 unklimatisierte Luft, nämlich Umluft aus dem Fahrzeuginnenraum und/oder Frischluft aus der Fahrzeugumgebung, zugeführt. Das Mischungsverhältnis zwischen Frischluft und Umluft kann üblicherweise eingestellt werden. Im Betrieb der Kühleinrichtung 2 wird die zugeführte Frischluft/Umluft bei der Durchströmung der Kühleinrichtung 2 gekühlt, um so Kaltluft zu erzeugen.

Die Klimatisierungsanlage 1 weist außerdem eine Heizeinrichtung 4 auf, die beispielsweise durch einen Heizmittel/Luft-Wärmeübertrager gebildet sein kann. Diese Heizeinrichtung 4 wird mit Luft, die von der Kühleinrichtung 2 kommt, beaufschlagt. Dementsprechend wird die Heizeinrichtung 4 bei aktivierter Kühleinrichtung 2 mit Kaltluft und deaktivierter Kühleinrichtung 2 mit Umluft/Frischluft beaufschlagt. Bei aktivierter Heizeinrichtung 4 wird die zugeführte Luft beim Durchströmen der Heizeinrichtung 4 erwärmt bzw. erhitzt, um so Heißluft oder Warmluft zu erzeugen.

Die Klimatisierungsanlage 1 umfaßt einen Heißluftkanal 41, der in Fig. 1 lediglich durch einen Pfeil symbolisiert ist und stromab der Heizeinrichtung 4 beginnt. Über Klappen 42 wird vorgegeben, wieviel Kaltluft der Heizeinrichtung 4 zugeführt und bei deren Durchströmung aufgeheizt wird. Eine der Heizeinrichtung 4 zugeführte Kaltluftströmung ist in Fig. 1 durch einen mit 8 bezeichneten Pfeil symbolisiert. Des weiteren ist ein die Heizeinrichtung 4 umgehender Kaltluftstrom mit 7 bezeichnet. Der die Heizeinrichtung 4 umgehende Kaltluftstrom 7 und ein bei der Durchströmung der Heizeinrichtung 4 erzeugter und über den Heißluftkanal 41 zugeführter Heißluftstrom werden in einem Mischraum 43 gemischt und bilden so einen erwärmten Luftstrom, der über einen in Fig. 1 durch einen Pfeil symbolisierten Warmluftkanal 5 abgeführt wird. Dabei kann ein gemeinsamer Mischraum 43 für alle Insassen zur Verfügung stehen. Alternativ kann jedem Insassen ein eigener Mischraum zugeordnet werden. Mit der erwärmten Luft aus dem Warmluftkanal 5 werden üblicherweise ein Fußraum und/oder Defrostdüsen versorgt.

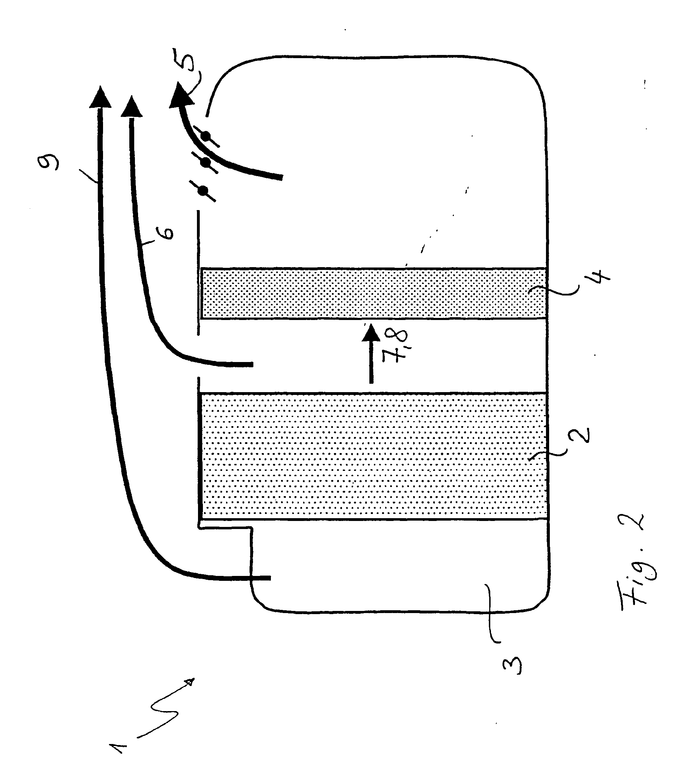

Alternativ zu der in Fig. 1 gezeigten Ausführungsform kann gemäß Fig. 2 eine wasserseitig geregelte Anlage vorgesehen sein, bei der die Heizeinrichtung 4 über ein Ventil mit mehr oder weniger (heißem) Kühlmittel versorgt wird. Die Kaltluft 7 bzw. 8 tritt dann nach dem Verdampfer 2 immer durch die Heizeinrichtung 4, um die mehr oder weniger erwärmte Luft zu erzeugen, die über den Warmluftkanal 5 abtransportiert wird.

Des weiteren ist ein Kaltluftkanal 6 vorgesehen, der in Fig. 1 und 2 ebenfalls nur durch einen Pfeil symbolisiert ist, der stromab der Kühleinrichtung 2 jedoch stromauf der Heizeinrichtung 4 beginnt und der die Heizeinrichtung 4 umgeht. Mit dem Kaltluftstrom aus dem Kaltluftkanal 6 läßt sich die Temperatur der an den Düsen ausgeblasenen Luft einzeln abkühlen und temperieren. Dadurch sind die Düsenluftströme, die z.B. im Armaturenbrett sitzen unter Umständen kühler als der Fußraum. Dies wird als Schichtung bezeichnet und führt zu mehr Komfort.

Des weiteren kann ein Frischluft/Umluftkanal 9 vorgesehen werden, der stromauf der Kühleinrichtung 2 ausgeht und ebenfalls durch einen Pfeil symbolisiert ist. Dabei umgeht der Frischluft/Umluftkanal 9 die Kühleinrichtung 2 und die Heizeinrichtung 4. Dementsprechend wird durch den Umluft/Frischluftkanal unklimatisierte Luft transportiert.

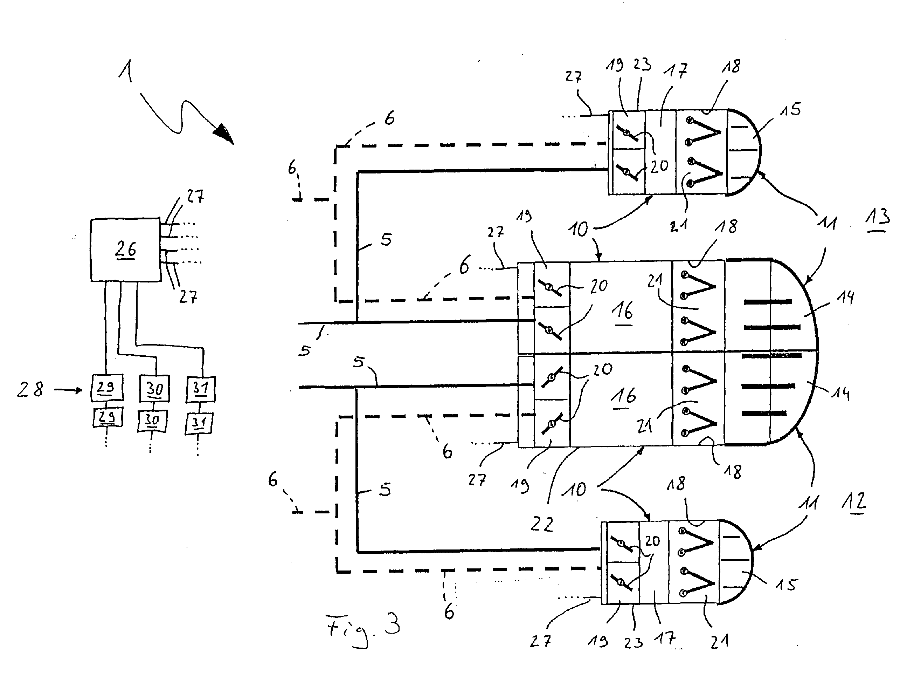

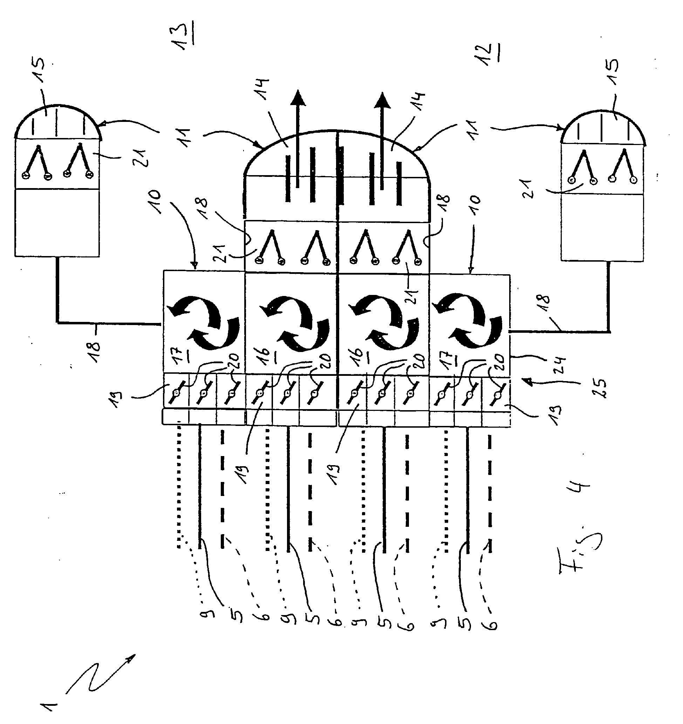

Entsprechend den Fig. 3 und 4 führen die genannten Kanäle 5,6 und 9 zu einer nachgelagerten Mischeinrichtung 10 der Klimatisierungsanlage 1. Während bei der in Fig. 3 gezeigten Ausführungsform lediglich der Warmluftkanal 5 und der Kaltluftkanal 6 dargestellt und an die Mischeinrichtung 10 angeschlossen sind, zeigt Fig. 4 zusätzlich auch den Umluft/Frischluftkanal 9, der bei dieser Ausführungsform ebenfalls an die Mischeinrichtung 10 angeschlossen ist. Entsprechend den Fig. 3 und 4 besitzt die Klimatisierungsanlage 1 außerdem eine Austrittsdüsenanordnung 11, die im vorliegenden Fall sowohl für einen Fahrerraum 12 als auch für einen Beifahrerraum 13 jeweils eine Mitteldüse 14 und jeweils eine Seitendüse 15 aufweist. Dementsprechend handelt es sich bei den Austrittsdüsen 14 und 15 somit um Düsen, die einem Frontbereich des Fahrzeuginnenraums zugeordnet sind. Ebenso kann die Austrittsdüsenanordnung 11 Düsen aufweisen, die einem Fondbereich des Fahrzeuginnenraums zugeordnet sind.

Die Mitteldüsen 14 und die Seitendüsen 15 sind zweckmäßig in einem Armaturenbrett des Fahrzeugs angeordnet. Ebenso sind Ausführungsformen möglich, bei denen Mitteldüsen 14 im Bereich einer Mittelkonsole angeordnet sind. Seitendüsen 15 können beispielsweise auch in Seitensäulen, z.B. in A-Säulen, B-Säulen oder in C-Säulen, des Fahrzeugs oder in den Fahrzeugtüren angeordnet sein. Des weiteren können auch im Fußraum derartige Düsen 14,15 angeordnet sein. Ebenso kann die Austrittsdüsenanordnung 11 Austrittsdüsen 14,15 aufweisen, die zur Enteisung einer Windschutzscheibe dienen und entlang eines unteren Randes dieser Windschutzscheibe im Armaturenbrett angeordnet sind. Die Seitendüsen 15 sind im Bereich der Fahrzeugseiten, also in der Nähe seitlicher Fahrzeugfenster angeordnet. Im Unterschied dazu sind die Mitteldüsen 14 etwa in der Mitte des Fahrzeuginnenraums, also relativ weit weg von den Seitenfenstern angeordnet.

Mit der Erfindung läßt sich beispielsweise der Seitendüsenbereich im Winter über die Warmluft des Warmluftkanals 5 ohne Zumischung von Kaltluft aus dem Kaltluftkanal 6 hinsichtlich Ausblastemperatur anheben, während der Mitteldüsenbereich durch Kaltluftzumischung kühlere Luft ausbläst. Dies ist besonders bei kalten Türen vorteilhaft. Im Unterschied dazu kann es im Sommer unter Umständen komfortabel sein, z.B. wenn die Sonne seitlich einfällt, an den Seitendüsen 15 kühlere Luft auszublasen. Besonders die Kompensation der Sonneneinstrahlung ist ein entscheidender Vorteil der Erfindung.

Die Mischeinrichtung 10 weist zumindest für die hier gezeigten Mitteldüsen 14 und Seitendüsen 15 jeweils einen separaten Mischraum auf, nämlich für jede Mitteldüse 14 einen Mitteldüsenmischraum 16 und für jede Seitendüse 15 einen Seitendüsenmischraum 17. Jeder dieser Mischräume 16 und 17 ist jeweils für sich an den Warmluftkanal 5 und an den Kaltluftkanal 6 angeschlossen. Bei der Ausführungsform gemäß Fig. 4 ist außerdem jeder Mischraum 16 und 17 jeweils für sich zusätzlich an den Umluft/Frischluftkanal 9 angeschlossen. Ausgangsseitig sind die Mischräume 16 und 17 jeweils an einem Mischluftkanal 18 angeschlossen, der zu der diesem Mischraum 16,17 zugeordneten Düse 14,15 führt. Abgesehen von den Seitendüsenmischräumen 17 der Ausführungsform gemäß Fig. 4 sind die Mischräume 16 und 17 dabei durch den zugehörigen Mischluftkanal 18 bzw. durch einen Einströmabschnitt des zugehörigen Mischluftkanals 18 gebildet. D.h., daß die Mischluftkanäle 18 zumindest in ihrem Einströmbereich als Mischraum 16 bzw. 17 ausgebildet sind.

Den Mischräumen 16 und 17 ist jeweils eine Einstelleinrichtung 19 zugeordnet, die in den Fig. 3 und 4 jeweils durch schwenkbare Steuerklappen 20 symbolisch angedeutet sind. Jede Steuerklappe 20 ist dabei einem der Kanäle 5,6 und 9 zugeordnet. Mit Hilfe der Einstelleinrichtungen 19 kann für jeden Mischraum 16,17 unabhängig von den anderen Mischräumen 16,17 das Mischungsverhältnis von zugeführter Kaltluft und zugeführter Warmluft und bei der Ausführungsform gemäß Fig. 4 zusätzlich der zugeführten Umluft/Frischluft eingestellt werden. Das Mischungsverhältnis kann dabei durch entsprechende Betätigungen der Steuerklappen 20 eingestellt werden. Es ist klar, daß die Einstelleinrichtungen 19 anstelle der Steuerklappen 20 grundsätzlich beliebige andere geeignete Stellorgane enthalten können, mit denen das Mischungsverhältnis der zugeführten Luftströme einstellbar ist. Beispielsweise können mit Hilfe eines Drehschiebers zwei und mehr Kanäle gleichzeitig gesteuert werden. Die Klappen 20 von Seiten- und Mitteldüsen können ebenfalls zu einer einzigen Wechselklappe zusammengefaßt werden, wie auch die Drosselklappen 21 von einer Seiten- und Mitteldüse.

Von besonderer Bedeutung ist hierbei, daß die Einstelleinrichtungen 19 der einzelnen Mischräume 16 und 17 unabhängig voneinander betätigt werden können, so daß im Extremfall an den hier gezeigten vier Düsen 14 und 15 vier unterschiedliche Luftströme einstellbar sind, die sich beispielsweise durch ihre Temperatur voneinander unterscheiden.

Zweckmäßig enthält jede Düse 14,15 in einem Ausströmbereich des daran angeschlossenen Mischluftkanals 18 jeweils eine Drosseleinrichtung 21, mit welcher der Volumenstrom an der jeweiligen Düse 14,15 einstellbar ist. Zweckmäßig sind auch diese Drosseleinrichtungen 21 unabhängig voneinander betätigbar, so daß an den hier gezeigten vier Düsen 14,15 jeweils andere Volumenströme einstellbar sind.

Bei der Ausführungsform gemäß Fig. 3 sind die beiden Mitteldüsenmischräume 16 in einem gemeinsamen Gehäuse 22 angeordnet. Die Seitendüsenmischräume 17 sind jeweils in separaten Gehäuse 23 angeordnet. Bei dieser Ausführungsform erfolgt demnach die Mischungsbildung unmittelbar vor der jeweiligen Düse 14 bzw. 15. Im Unterschied dazu sind bei der Ausführungsform gemäß Fig. 4 beide Mitteldüsenmischräume 16 und beide Seitendüsenmischräume 17 in einem gemeinsamen Gehäuse 24 untergebracht, wodurch eine Mischereinheit 25 ausgebildet ist, welche die hier gezeigten vier unabhängigen Mischräume 16,17 beinhaltet. Die Mischungsbildung erfolgt somit zentral in der Mischereinheit 25, wodurch der Aufwand zur Versorgung der Seitendüsen 15 mit der klimatisierten Luft reduziert ist, da lediglich nur noch die separaten einzelnen Mischluftkanäle 18 verlegt werden müssen.

In Fig. 4 sind die einzelnen Mischräume 16 und 17 jeweils über separate Zweige an die Kanäle 5,6,9 angeschlossen. Es ist klar, daß die Mischereinheit 25 bei einer Weiterbildung einen Kaltluftsammelraum, einen Heißluftsammelraum und gegebenenfalls einen Umluft/Frischluftsammelraum aufweisen kann, wobei jeder dieser Sammelräume eingangsseitig an den zugehörigen Kanal 5,6,9 angeschlossen ist und ausgangsseitig mit den einzelnen Mischräumen 16 und 17 verbunden ist. Die Leitungsführung kann durch eine derartige Bauweise vereinfacht werden.

Bei den hier gezeigten Ausführungsformen sind für den Fahrer bzw. für den Beifahrer jeweils nur zwei Düsen, nämlich eine Seitendüse 15 und eine Mitteldüse 14 vorgesehen, wobei die Düsen 14,15 von Fahrerseite 12 und Beifahrerseite 13 grundsätzlich unabhängig voneinander hinsichtlich des Mischungsverhältnisses variierbar sind. Es ist klar, daß dem Fahrer bzw. dem Beifahrer jeweils noch weitere zusätzliche fensternahe Düsen 15 und/oder fensterferne Düsen 14 zugeordnet sein können, wobei diese zusätzlichen Düsen grundsätzlich ebenfalls über separate Mischräume verfügen können und hinsichtlich ihres Mischungsverhältnisses unabhängig von den anderen Düsen einstellbar sein können. Bevorzugt wird jedoch eine Bauweise, bei der mehrere fensternahe Seitendüsen 15, z.B. eine im Armaturenbrett und eine in der B-Säule, einen gemeinsamen Seitendüsenmischraum 17 aufweisen. Die über den gemeinsamen Seitendüsenmischraum 17 miteinander gekoppelten Seitendüsen 15 erhalten dementsprechend über die Mischluftkanäle dieselbe klimatisierte Luft. Entsprechendes gilt auch für den Fall, daß mehrere fensterferne Mitteldüsen 14, z.B. eine im Armaturenbrett und eine in der Mittelkonsole, vorgesehen sind. Auch diese Mitteldüsen 14 können einen gemeinsamen Mitteldüsenmischraum 16 aufweisen und werden dementsprechend mit der gleichen klimatisierten Luft versorgt.

Entsprechend Fig. 3 kann die Klimatisierungsanlage 1 mit einer durch einen Rahmen symbolisierten Steuerungseinrichtung 26 ausgestattet sein, die über Steuerleitungen 27 mit den Einstelleinrichtungen 19 der Mischräume 16,17 verbunden ist. Die Einstelleinrichtungen 19 verfügen dabei über entsprechende, hier nicht dargestellte Aktuatoren, die von der Steuerungseinrichtung 26 über die Steuerleitungen 27 betätigbar sind. Die Steuerungseinrichtung 26 ist außerdem mit einer ebenfalls nur exemplarisch dargestellten Sensorik 28 verbunden, die beispielsweise über wenigstens einen Thermopilesensor 29, oder wenigstens einen Sonnenlichtsensor 30 oder wenigstens einen herkömmlichen Temperatursensor 31 oder eine Kombination mehrerer verschiedener Sensoren 29,30,31 umfaßt.

Die Steuerungseinrichtung 26 kann beispielsweise so ausgebildet sein, daß sie in Abhängigkeit vorgegebener bzw. vorgebbarer Bedingungen die Mischungsverhältnisse in den Mitteldüsenmischräumen 16 und in den Seitendüsenmischräumen 17 automatisch einstellt. Dabei kann die Betätigung der Einstelleinrichtungen 19 im Sinne einer Steuerung, z.B. mit Hilfe von Kennfeldern, oder im Sinne einer Regelung, z.B. mit einem Soll-Ist-Vergleich von Temperaturwerten, erfolgen. Beispielsweise kann mit Hilfe der Thermopilesensoren 29 die Oberflächentemperatur des Fahrers bzw. des Beifahrers an verschiedenen Stellen gemessen werden, die mit Hilfe der Austrittsdüsen 14,15 beaufschlagbar sind. In Abhängigkeit der Meßergebnisse können dann die Mischungsverhältnisse für die Austrittsdüsen 14,15 auf die aktuellen Oberflächentemperaturen abgestimmt werden. Zusätzlich oder alternativ kann mit Hilfe der Sonnenlichtsensoren 30 die aktuelle Sonnenlichteinstrahlungssituation im Fahrzeuginnenraum bzw. an den jeweiligen Sitzplätzen erfaßt und ausgewertet werden. Die Mischungsverhältnisse können dann in geeigneter Weise an die aktuelle Sonnenlichteinstrahlungssituation angepaßt werden. Zusätzlich oder alternativ kann mit Hilfe der Temperatursensoren 31 an vorbestimmten repräsentativen lokalen Stellen innerhalb des Fahrzeuginnenraums die Temperaturverteilung im Fahrzeuginnenraum ermittelt werden. Die Steuerungseinrichtung 26 betätigt dann die Einstelleinrichtungen 19 in einer geeigneten Weise, um eine gewünschte Temperaturverteilung im Fahrzeuginnenraum zu erreichen. Dabei kann die Steuerungseinrichtung 26 vor allem im Hinblick auf folgende Anforderungen optimiert werden: Der Energieverbrauch zum Erreichen einer gewünschten Temperaturverteilung soll minimiert werden. Die zur Erreichung der erwünschten Temperaturverteilung erforderlichen Strömungsgeschwindigkeiten sollen minimiert werden. Des weiteren sollen die zur Erreichung der gewünschten Temperaturverteilung erforderlichen Volumenströme minimiert werden. Insgesamt ergibt sich dadurch ein erhöhter Komfort bei der Klimatisierung des Fahrzeuginnenraums.

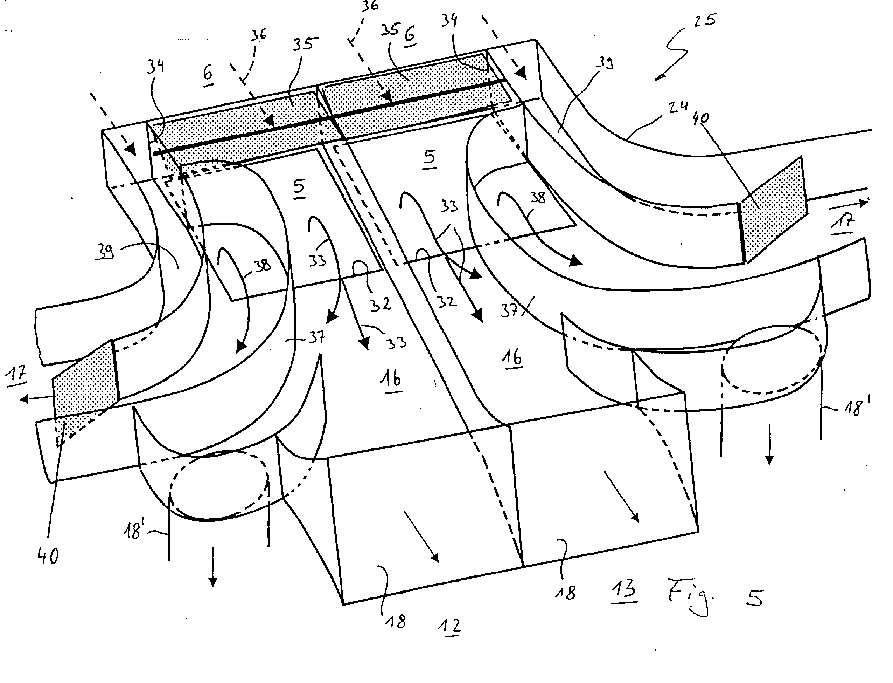

Entsprechend Fig. 5 kann bei einer bevorzugten Ausführungsform die Mischereinheit 25 in ihrem Gehäuse 24 für die Fahrerseite 12 und für die Beifahrerseite 13 die beiden Mitteldüsenmischräume 16 enthalten, die ausgangsseitig in die zugehörigen Mischluftkanäle 18 übergehen. Eingangsseitig ist jeder Mitteldüsenmischraum 16 über eine bodenseitig angeordnete Öffnung 32 mit dem Warmluftkanal 5 verbunden, so daß durch die Öffnung 32 entsprechend Pfeilen 33 Heißluft in die Mitteldüsenmischräume 16 einströmt. Des weiteren sind die Mitteldüsenmischräume 16 stirnseitig über Eintrittsöffnungen 34 mit dem Kaltluftkanal 6 verbunden, wobei in den Eintrittsöffnungen 34 jeweils eine Steuerklappe 35 angeordnet ist, mit der der Öffnungsquerschnitt der zugehörigen Eintrittsöffnung 34 einstellbar ist. Entsprechend Pfeilen 36 kann dann Kaltluft in die Mitteldüsenmischräume 16 einströmen. Aus den Mitteldüsenmischräumen 16 wird jeweils über einen weiteren Mischluftkanal 18' Mischluft abgezweigt. Dabei münden die zusätzlichen Mischluftkanäle 18' ebenfalls bodenseitig in die Mitteldüsenmischräume 16 ein. Diese zusätzlichen Mischluftkanäle 18' führen beispielsweise zu einer im Fußraum angeordneten Luftaustrittsdüse. Zusätzlich oder alternativ können diese oder andere zusätzliche Mischluftkanäle 18 zu Luftaustrittsdüsen führen, die zur Beaufschlagung der Windschutzscheibe vorgesehen sind, sogenannte "Defrosterdüsen".

Bei der in Fig. 5 gezeigten bevorzugten Ausführungsform wird mit Hilfe einer Trennwand 37 ein Teil der bodenseitigen Öffnung 32 im jeweiligen Mitteldüsenmischraum 16 ausgeblendet, so daß ein Teil der über den Warmluftkanal 5 zugeführten temperierten Luft entsprechend einem Pfeil 38 zum Seitendüsenmischraum 17 der jeweiligen Seitendüse 15 gelangt. Die Seitendüsenmischräume 17 bilden dabei die Eintrittsabschnitte der zu den Seitendüsen 15 führenden Mischluftkanäle 18. Die Seitendüsenmischräume 17 sind außerdem über einen Kanalabschnitt 39 an den Kaltluftkanal 6 angeschlossen. Im Eingangsbereich der Seitendüsenmischräume 17 ist jeweils eine Steuerklappe 40 angeordnet, mit deren Hilfe das Mischungsverhältnis zwischen Heißlufteintritt und Kaltlufteintritt in den Seitendüsenmischräumen 17 einstellbar ist.

### Bezugszeichenliste

- 1: Klimatisierungsanlage
- 2: Kühleinrichtung
- 3: Luftzuführungskanal
- 4: Heizeinrichtung
- 5: Warmluftkanal
- 6: Kaltluftkanal
- 7: Kaltluftstrom
- 8: Kaltluftzufuhr zu 4
- 9: Umluft/Frischluftkanal
- 10: Mischeinrichtung
- 11: Austrittsdüsenanordnung
- 12: Fahrerseite
- 13: Beifahrerseite
- 14: Mitteldüse
- 15: Seitendüse
- 16: Mitteldüsenmischraum
- 17: Seitendüsenmischraum
- 18: Mischluftkanal
- 19: Einstelleinrichtung
- 20: Steuerklappe
- 21: Drosseleinrichtung
- 22: Gehäuse
- 23: Gehäuse
- 24: Gehäuse
- 25: Mischereinheit
- 26: Steuerungseinrichtung
- 27: Steuerleitung
- 28: Sensorik
- 29: Thermopilesensor
- 30: Sonnenlichtsensor
- 31: Temperatursensor
- 32: Öffnung
- 33: Strömungspfeil
- 34: Eintrittsöffnung
- 35: Steuerklappe
- 36: Strömungspfeil
- 37: Wand
- 38: Strömungspfeil
- 39: Kanalabschnitt
- 40: Steuerklappe
- 41: Heißluftkanal
- 42: Klappe
- 43: Mischraum

## Patentansprüche

1. Klimatisierungsanlage eines Fahrzeugs, insbesondere eines Personenkraftwagens, zur Zuführung klimatisierter Luft in einen Fahrzeuginnenraum,
- mit einer Austrittsdüsenanordnung (11), die sowohl für die Fahrerseite (12) als auch für die Beifahrerseite (13) jeweils wenigstens eine fensterferne Mitteldüse (14) und wenigstens eine fensternahe Seitendüse (15) aufweist
- mit einer Kühleinrichtung (2), die mit Frischluft und/oder Umluft beaufschlagt ist und zum Kühlen der zugeführten Luft dient,
- mit einer Heizeinrichtung (4), die mit von der Kühleinrichtung (2) kommender Luft beaufschlagt ist und zum Heizen der zugeführten Luft dient,
- mit einer Mischeinrichtung (10), die wenigstens vier Mischräume (16,17) aufweist, an denen eingangsseitig ein gemeinsamer von der Kühleinrichtung (2) kommender und die Heizeinrichtung (4) umgehender Kaltluftkanal (6) und ein gemeinsamer von der Heizeinrichtung (4) kommender Warmluftkanal (5) angeschlossen sind und an denen ausgangsseitig jeweils ein zu wenigstens einer Düse (14,15) führender Mischluftkanal (18) angeschlossen ist,
- wobei die Mischeinrichtung (10) für die Mitteldüsen (14) Mitteldüsenmischräume (16) und für die Seitendüsen (15) Seitendüsenmischräume (17) aufweist,
- wobei die Mitteldüsenmischräume (16) und die Seitendüsenmischräume (17) jeweils für sich an den gemeinsamen Kaltluftkanal (6) und an den gemeinsamen Warmluftkanal (5) angeschlossen sind,
- wobei die Mitteldüsenmischräume (16) und die Seitendüsenmischräume (17) jeweils über einen separaten Mischluftkanal (18) an die zugehörigen Düsen (14,15) angeschlossen sind.

2. Klimatisierungsanlage nach Anspruch 1,
**dadurch gekennzeichnet,**
**daß** ein Mitteldüsenmischraum (16) und ein Seitendüsenmischraum (17) in voneinander getrennten Gehäusen (22,23) angeordnet und/oder ausgebildet sind.

3. Klimatisierungsanlage nach Anspruch 1,
**dadurch gekennzeichnet,**
**daß** ein Mitteldüsenmischraum (16) und ein Seitendüsenmischraum (17) in einem gemeinsamen Gehäuse (24) einer Mischereinheit (25) angeordnet und/oder ausgebildet sind.

4. Klimatisierungsanlage nach einem der Ansprüche 1 bis 3,
**dadurch gekennzeichnet,**
**daß** ein Mitteldüsenmischraum (16) und ein Seitendüsenmischraum (17) jeweils durch den zugehörigen Mischluftkanal (18) oder durch einen Einströmabschnitt des zugehörigen Mischluftkanals (18) gebildet sind.

5. Klimatisierungsanlage nach einem der Ansprüche 1 bis 4,
**dadurch gekennzeichnet,**
**daß** ein Mitteldüsenmischraum (16) und ein Seitendüsenmischraum (17) jeweils für sich eingangsseitig an einen die Kühleinrichtung (2) und die Heizeinrichtung (4) umgehenden Frischluft/Umluftkanal (9) angeschlossen sind.

6. Klimatisierungsanlage nach einem der Ansprüche 1 bis 5,
**dadurch gekennzeichnet,**
**daß** bei einem Mitteldüsenmischraum (16) und bei einem Seitendüsenmischraum (17) jeweils ein Mischungsverhältnis von zugeführter Kaltluft und zugeführter Warmluft und gegebenenfalls zugeführter Frischluft/Umluft unabhängig vom anderen Mischraum (16,17) einstellbar ist.

7. Klimatisierungsanlage nach Anspruch 6,
**dadurch gekennzeichnet,**
**daß** einem Mitteldüsenmischraum (16) und einem Seitendüsenmischraum (17) jeweils eine Einstelleinrichtung (19) zum Einstellen der zugeführten Kaltluftmenge und der zugeführten Warmluftmenge und gegebenenfalls der zugeführten Frischluft/Umluftmenge zugeordnet ist, wobei die Einstelleinrichtung (19) des Mitteldüsenraums (16) und die Einstelleinrichtung (19) des Seitendüsenmischraums (17) unabhängig voneinander betätigbar sind.

8. Klimatisierungsanlage nach einem der Ansprüche 1 bis 7,
**dadurch gekennzeichnet,**
**daß** eine Wechselklappe vorgesehen ist, die Kaltluft in variablem Verhältnis den jedem Insassen zugeordneten Seitendüsen mischraum (17) und Mitteldüsen mischraum (16) zumischen kann.

9. Klimatisierungsanlage nach einem der Ansprüche 1 bis 8,
**dadurch gekennzeichnet,**
**daß** eine Drossel-Wechselklappe vorgesehen ist, die Luft in variablen Mengenverhältnissen den jedem Insassen zugeordneten Seitendüsen (15) und Mitteldüsen (14) zuführen kann.

10. Klimatisierungsanlage nach einem der Ansprüche 1 bis 9,
**dadurch gekennzeichnet,**
**daß** dem Seitendüse mischraum (17) zumindest eines Insassen und dem Mitteldüse mischraum (16) (14) des neben ihm sitzenden Insassen über eine gemeinsame Mischklappe die Kaltluft zugemischt wird.

11. Klimatisierungsanlage nach einem der Ansprüche 1 bis 10,
**dadurch gekennzeichnet,**
**daß** die Seitendüse (15) zumindest eines Insassen und die Mitteldüse (14) des neben ihm sitzenden Insassen von einer gemeinsamen Drosselklappe abgedrosselt werden.

12. Klimatisierungsanlage nach einem der Ansprüche 1 bis 11,
**dadurch gekennzeichnet,**
- **daß** bei den Mischräumen (16,17) der Fahrerseite (12) und bei den Mischräumen (16,17) der Beifahrerseite (13) jeweils das Mischungsverhältnis von zugeführter Kaltluft und zugeführter Warmluft und gegebenenfalls zugeführter Frischluft/Umluft unabhängig von den Mischräumen (16,17) der anderen Fahrzeugseite (12,13) einstellbar ist und/oder
- bei den Mischräumen (16,17) des Frontbereichs und bei den Mischräumen (16,17) des Fondbereichs jeweils das Mischungsverhältnis von zugeführter Kaltluft und zugeführter Heißluft und gegebenenfalls zugeführter Frischluft/Umluft unabhängig von den Mischräumen (16,17) des anderen Innenraumbereichs einstellbar ist.

13. Klimatisierungsanlage zumindest nach Anspruch 6 oder 7,
**dadurch gekennzeichnet,**
**daß** eine Steuerungseinrichtung (26) vorgesehen ist, die in Abhängigkeit vorgegebener und/oder vorgebbarer Bedingungen die Mischungsverhältnisse in einem Mitteldüsenmischraum (16) und in einem Seitendüsenmischraum (17) automatisch einstellt.

14. Klimatisierungsanlage nach Anspruch 13,
**dadurch gekennzeichnet,**
**daß** die Bedingungen eine Oberflächentemperatur der auf dem zugehörigen Sitzplatz sitzenden Person und/oder eine Sonnenlichteinstrahlungssituation und/oder Temperaturwerte an wenigstens einer vorbestimmten Temperaturmeßstelle und/oder vorgebbare Sollwerttemperaturen umfassen.

15. Klimatisierungsanlage nach Anspruch 13 oder 14,
**dadurch gekennzeichnet,**
**daß** die Steuerungseinrichtung (26) mit einer Sensorik (28) verbunden ist, die wenigstens einen Thermopilesensor (29) und/oder wenigstens einen Sonnenlichtsensor (30) und/oder wenigstens einen Temperatursensor (31) umfaßt.

16. Klimatisierungsanlage nach einem der Ansprüche 1 bis 15,
**dadurch gekennzeichnet,**
**daß** wenigstens eine der Seitendüsen (15) im Armaturenbrett angeordnet ist und/oder daß wenigstens eine der Seitendüsen (15) in einer Seitensäule des Fahrzeugs angeordnet ist und/oder daß wenigstens eine der Seitendüsen (15) in einer Seitentür angeordnet ist und/oder daß wenigstens eine der Seitendüsen (15) im Fußraum des Fahrzeugs angeordnet ist.

17. Klimatisierungsanlage nach einem der Ansprüche 1 bis 16,
**dadurch gekennzeichnet,**
**daß** mehrere Seitendüsen (15) vorgesehen sind, die an einen gemeinsamen Seitendüsenmischraum (17) angeschlossen sind.

18. Klimatisierungsanlage nach einem der Ansprüche 1 bis 17,
**dadurch gekennzeichnet,**
**daß** wenigstens eine der Mitteldüsen (14) im Armaturenbrett angeordnet ist und/oder daß wenigstens eine der Mitteldüsen (14) in einer Mittelkonsole des Fahrzeugs angeordnet ist und/oder daß wenigstens eine Mitteldüsen (14) im Fußraum des Fahrzeugs angeordnet ist.

19. Klimatisierungsanlage nach einem der Ansprüche 1 bis 18,
**dadurch gekennzeichnet,**
**daß** mehrere Mitteldüsen (14) vorgesehen sind, die an einen gemeinsamen Mitteldüsenraum (16) angeschlossen sind.

## Claims

1. An air conditioning device in a vehicle, in particular a passenger car, for delivering conditioned air into a vehicle interior,
- having an delivery vent arrangement (11) which has at least one central, non-window-side vent (14) and at least one lateral, window-side vent (15) on both the driver's side (12) and the passenger's side (13),
- having a cooling device (2) which is supplied with fresh air and/or recirculated air and which serves to cool said air supply,
- having a heating device (4) which is supplied with air from the cooling device (2) and which serves to heat said air supply,
- having a mixing device (10) which has at least four mixing chambers (16, 17) connected to the inlet side of which are a common cold air duct (6) which comes from the cooling device (1) and bypasses the heating device (4) and a common warm air duct (5) coming from the heating device (4), and connected to the outlet side of which is a mixed air duct (18) leading to at least one vent (14, 15),
- the mixing device (10) having central vent mixing chambers (16) for the central vents (14) and lateral vent mixing chambers (17) for the lateral vents (17),
- the central vent mixing chambers (16) and the lateral vent mixing chambers (17) each being connected independently to the common cold air duct (6) and to the common warm air duct (5),
- the central vent mixing chambers (16) and the lateral vent mixing chambers (17) each being connected to the corresponding vents (14, 15) by a separate mixed air duct (18).

2. An air conditioning device in accordance with claim 1,
**characterised in that**
a central vent mixing chamber (16) and a lateral vent mixing chamber (17) are positioned and/or formed in separate housings (22, 23).

3. An air conditioning device in accordance with claim 1,
**characterised in that**
a central vent mixing chamber (16) and a lateral vent mixing chamber (17) are positioned and/or formed in a common housing (24) in a mixer unit (25).

4. An air conditioning device in accordance with one of claims 1 to 3,
**characterised in that**
a central vent mixing chamber (16) and a lateral vent mixing chamber (17) each take the form of the corresponding mixed air duct (18) or an inflow section of the corresponding mixed air duct (18).

5. An air conditioning device in accordance with one of claims 1 to 4,
**characterised in that**
a central vent mixing chamber (16) and a lateral vent mixing chamber (17) are each connected independently on the inlet side to a fresh air/recirculated air duct (9) which bypasses the cooling device (2) and the heating device (4).

6. An air conditioning device in accordance with one of claims 1 to 5,
**characterised in that**
in a central vent mixing chamber (16) and in a lateral vent mixing chamber (17) it is possible to adjust a mixing ratio of cold air delivered, warm air delivered and where applicable fresh air/recirculated air delivered independently of other mixing chambers (16, 17).

7. An air conditioning device in accordance with claim 6,
**characterised in that**
assigned to a central vent mixing chamber (16) and to a lateral vent mixing chamber (17) is an adjusting device (19) for adjusting the volume of cold air delivered, the volume of warm air delivered and where applicable the volume of fresh air/recirculated air delivered, it being possible to actuate the adjusting device (19) for the central vent mixing chamber (16) and the adjusting device (19) for the lateral vent mixing chamber (17) independently of one another.

8. An air conditioning device in accordance with one of claims 1 to 7,
**characterised in that**
a changeover damper is provided which is able to add cold air to the lateral vent mixing chamber (17) and the central vent mixing chamber (16) assigned to each occupant in variable proportions.

9. An air conditioning device in accordance with one of claims 1 to 8,
**characterised in that**
a reducing changeover damper is provided which is able to deliver air to the lateral vents (15) and the central vents (14) assigned to each occupant in variable proportions.

10. An air conditioning device in accordance with one of claims 1 to 9,
**characterised in that**
the cold air is added to the lateral vent mixing chamber (17) of at least one occupant and to the central vent mixing chamber (16) of the occupant sitting next to him via a common mixing valve.

11. An air conditioning device in accordance with one of claims 1 to 10,
**characterised in that**
the lateral vent (15) of at least one occupant and the central vent (14) of the occupant sitting next to him are throttled by a common throttle valve.

12. An air conditioning device in accordance with one of claims 1 to 11,
**characterised in that**
- the mixing ratio of the cold air delivered, the warm air delivered and where applicable the fresh air/recirculated air delivered in the mixing chambers (16, 17) on the driver's side (12) and the mixing chambers (16, 17) on the passenger's side (13) can be adjusted independently of the mixing chambers (16, 17) on the other side of the vehicle (12, 13), and/or
- the mixing ratio of the cold air delivered, the warm air delivered and where applicable the fresh air/recirculated air delivered in the mixing chambers (16, 17) in the front area and the mixing chambers (16, 17) in the rear area can be adjusted independently of the mixing chambers (16, 17) in the other area of the vehicle interior.

13. An air conditioning device at least in accordance with claim 6 or 7,
**characterised in that**
a control device (26) is provided which automatically adjusts the mixing ratio in a central vent mixing chamber (16) and in a lateral vent mixing chamber (17) dependent on pre-determined and/or pre-determinable conditions.

14. An air conditioning device in accordance with claim 13,
**characterised in that**
the conditions comprise a surface temperature of the person sitting on the relevant seat and/or a sunlight level situation and/or temperature values at at least one pre-determined temperature measuring point and/or pre-determinable reference temperatures.

15. An air conditioning device in accordance with claim 13 or 14,
**characterised in that**
the control device (26) is connected to a sensor system (28) which comprises at least one thermopile sensor (29) and/or at least one sunlight sensor (30) and/or at least one temperature sensor (31).

16. An air conditioning device in accordance with one of claims 1 to 15,
**characterised in that**
at least one of the lateral vents (15) is positioned in the instrument panel and/or at least one of the lateral vents (15) is positioned in a lateral column in the vehicle and/or at least one of the lateral vents (15) is positioned in a side door and/or at least one of the lateral vents (15) is positioned in the footwell of the vehicle.

17. An air conditioning device in accordance with one of claims 1 to 16,
**characterised in that**
several lateral vents (15) which are connected to a common lateral vent mixing chamber (17) are provided.

18. An air conditioning device in accordance with one of claims 1 to 17,
**characterised in that**
at least one of the central vents (14) is positioned in the instrument panel and/or at least one of the central vents (14) is positioned in a central console in the vehicle and/or at least one of the central vents (14) is positioned in the footwell of the vehicle.

19. An air conditioning device in accordance with one of claims 1 to 18,
**characterised in that**
several central vents (14) which are connected to a common central vent mixing chamber (17) are provided.

## Revendications

1. Système de climatisation d'un véhicule, en particulier d'un véhicule de tourisme, conçu pour fournir de l'air conditionné à l'habitacle d'un véhicule, comprenant :
- un agencement de buses de sortie (11) qui présente à chaque fois, aussi bien pour le côté conducteur (12) que pour le côté passager (13), au moins une buse centrale (14) éloignée de la vitre et au moins une buse latérale (15) placée à proximité de la vitre,
- un dispositif de refroidissement (2) qui est alimenté en air frais et / ou en air ambiant et sert au refroidissement de l'air fourni,
- un dispositif de chauffage (4) qui est alimenté avec de l'air provenant du dispositif de refroidissement (2) et sert au chauffage de l'air fourni,
- un dispositif de mélange (10) qui présente au moins quatre espaces de mélange (16, 17) auxquels sont raccordés, côté entrée, un conduit d'air froid (6) commun venant du dispositif de refroidissement (2) et contournant le dispositif de chauffage (4), et un conduit d'air chaud (5) commun venant du dispositif de chauffage (4) et auxquels est raccordé à chaque fois, côté sortie, un conduit d'air de mélange (18) conduisant au moins à une buse (14, 15),
où le dispositif de mélange (10) présente, pour les buses centrales (14), des espaces de mélange (16) des buses centrales et, pour les buses latérales (15), des espaces de mélange (17) des buses latérales,
où les espaces de mélange (16) des buses centrales et les espaces de mélange (17) des buses latérales sont raccordés à chaque fois, séparément, au conduit d'air froid commun (6) et au conduit d'air chaud commun (5),
où les espaces de mélange (16) des buses centrales et les espaces de mélange (17) des buses latérales sont raccordés à chaque fois aux buses associées (14, 15), via un conduit d'air de mélange distinct (18).

2. Système de climatisation selon la revendication 1, **caractérisé en ce qu'**un espace de mélange (16) des buses centrales et un espace de mélange (17) des buses latérales sont disposés et / ou conçus dans des carters (22, 23) séparés l'un de l'autre.

3. Système de climatisation selon la revendication 1, **caractérisé en ce qu'**un espace de mélange (16) des buses centrales et un espace de mélange (17) des buses latérales sont disposés et / ou conçus dans un carter commun (24) d'un ensemble mélangeur (25).

4. Système de climatisation selon l'une quelconque des revendications 1 à 3, **caractérisé en ce qu'**un espace de mélange (16) des buses centrales et un espace de mélange (17) des buses latérales sont formés, respectivement, par le conduit d'air de mélange associé (18) ou par une partie d'entrée du conduit d'air de mélange associé (18).

5. Système de climatisation selon l'une quelconque des revendications 1 à 4, **caractérisé en ce qu'**un espace de mélange (16) des buses centrales et un espace de mélange (17) des buses latérales sont raccordés à chaque fois séparément, côté entrée, à un conduit d'air frais / d'air ambiant (9) contournant le dispositif de refroidissement (2) et le dispositif de chauffage (4).

6. Système de climatisation selon l'une quelconque des revendications 1 à 5, **caractérisé en ce que**, dans le cas d'un espace de mélange (16) des buses centrales et dans le cas d'un espace de mélange (17) des buses latérales, une proportion de mélange d'air froid fourni et d'air chaud fourni et, le cas échéant, d'air frais / d'air ambiant fourni, est réglable indépendamment de l'autre espace de mélange (16, 17).

7. Système de climatisation selon la revendication 6, **caractérisé en ce qu'**un dispositif de réglage (19) servant au réglage de la quantité d'air froid fournie et de la quantité d'air chaud fournie et, le cas échéant, de la quantité d'air frais / d'air ambiant fournie, est affecté, respectivement, à un espace de mélange (16) des buses centrales et à un espace de mélange (17) des buses latérales, où le dispositif de réglage (19) de l'espace de mélange (16) des buses centrales et le dispositif de réglage (19) de l'espace de mélange (17) des buses latérales peuvent être actionnés indépendamment l'un de l'autre.

8. Système de climatisation selon l'une quelconque des revendications 1 à 7, **caractérisé en ce qu'**il est prévu un volet directionnel qui, dans une proportion variable, peut mélanger de l'air froid au niveau de l'espace de mélange (17) des buses latérales affecté à chaque passager et au niveau de l'espace de mélange (16) des buses centrales affecté à chaque passager.

9. Système de climatisation selon l'une quelconque des revendications 1 à 8, **caractérisé en ce qu'**il est prévu un volet directionnel d'obturation qui, suivant des proportions de quantités variables, peut fournir de l'air aux buses latérales (15) et aux buses centrales (14) affectées à chaque passager.

10. Système de climatisation selon l'une quelconque des revendications 1 à 9, **caractérisé en ce que** l'air froid est mélangé, via un volet de mélange commun, au niveau de l'espace de mélange (17) des buses latérales d'au moins un passager, et au niveau de l'espace de mélange (16) des buses centrales du passager assis à côté de lui.

11. Système de climatisation selon l'une quelconque des revendications 1 à 10, **caractérisé en ce que** la buse latérale (15) d'au moins un passager et la buse centrale (14) du passager assis à côté de lui sont obturées par un volet d'obturation commun.

12. Système de climatisation selon l'une quelconque des revendications 1 à 11, **caractérisé en ce que**
- concernant les espaces de mélange (16, 17) du côté conducteur (12) et concernant les espaces de mélange (16, 17) du côté passager (13), la proportion de mélange d'air froid fourni et d'air chaud fourni et, le cas échéant, d'air frais / d'air ambiant fourni, est réglable indépendamment des espaces de mélange (16, 17) de l'autre côté (12, 13) du véhicule et / ou
- concernant les espaces de mélange (16, 17) du secteur avant et concernant les espaces de mélange (16, 17) du secteur arrière, la proportion de mélange d'air froid fourni et d'air chaud fourni et, le cas échéant, d'air frais / d'air ambiant fourni, est réglable indépendamment des espaces de mélange (16, 17) de l'autre secteur de l'habitacle.

13. Système de climatisation au moins selon la revendication 6 ou 7, **caractérisé en ce qu'**il est prévu un dispositif de commande (26) qui règle automatiquement les proportions de mélange dans un espace de mélange (16) des buses centrales et dans un espace de mélange (17) des buses latérales, indépendamment de conditions prédéfinies et / ou pouvant être prédéfinies.

14. Système de climatisation selon la revendication 13, **caractérisé en ce que** les conditions englobent une température de surface de la personne assise sur le siège concerné et / ou une situation d'ensoleillement et / ou des valeurs de températures sur au moins un point de mesure de température prédéterminé et / ou des températures théoriques pouvant être prédéfinies.

15. Système de climatisation selon la revendication 13 ou 14, **caractérisé en ce que** le dispositif de commande (26) est raccordé à un ensemble de capteurs (28) qui comprend au moins un capteur à thermopile (29) et / ou au moins un capteur d'ensoleillement (30) et / ou au moins un capteur de température (31).

16. Système de climatisation selon l'une quelconque des revendications 1 à 15, **caractérisé en ce que** au moins l'une des buses latérales (15) est disposée dans le tableau de bord et / ou **en ce que** au moins l'une des buses latérales (15) est disposée dans une colonne latérale du véhicule et / ou **en ce que** au moins l'une des buses latérales (15) est disposée dans une porte latérale et / ou **en ce que** au moins l'une des buses latérales (15) est disposée dans l'espace du véhicule prévu pour les pieds.

17. Système de climatisation selon l'une quelconque des revendications 1 à 16, **caractérisé en ce qu'**il est prévu plusieurs buses latérales (15) qui sont raccordées à un espace de mélange commun (17) des buses latérales.

18. Système de climatisation selon l'une quelconque des revendications 1 à 17, **caractérisé en ce que** au moins l'une des buses centrales (14) est disposée dans le tableau de bord et / ou **en ce que** au moins l'une des buses centrales (14) est disposée dans une console centrale du véhicule et / ou **en ce que** au moins l'une des buses centrales (14) est disposée dans l'espace du véhicule prévu pour les pieds.

19. Système de climatisation selon l'une quelconque des revendications 1 à 18, **caractérisé en ce qu'**il est prévu plusieurs buses centrales (14) qui sont raccordées à un espace de mélange commun (16) des buses centrales.
